Europäisches Patentamt

European Patent Office

Office européen des brevets

(11) Veröffentlichungsnummer: **0 244 883 B1**

# (12) EUROPÄISCHE PATENTSCHRIFT

(45) Veröffentlichungstag der Patentschrift: **17.07.91**

(51) Int. Cl.⁵: **G01D 5/26, G02F 2/00**

(21) Anmeldenummer: **87200279.5**

(22) Anmeldetag: **20.02.87**

(54) Verfahren zur Ermittlung von Messdaten über eine optische Übertragungsstrecke mittels eines optischen Sensors.

(30) Priorität: **28.02.86 DE 3606488**

(43) Veröffentlichungstag der Anmeldung:
**11.11.87 Patentblatt 87/46**

(45) Bekanntmachung des Hinweises auf die
Patenterteilung:
**17.07.91 Patentblatt 91/29**

(84) Benannte Vertragsstaaten:
**DE FR GB**

(56) Entgegenhaltungen:
**EP-A- 0 168 182**
**DE-A- 3 217 078**

(73) Patentinhaber: **Philips Patentverwaltung GmbH**
**Wendenstrasse 35 Postfach 10 51 49**
**W-2000 Hamburg 1(DE)DE**

Patentinhaber: **N.V. Philips' Gloeilampenfabrieken**
**Groenewoudseweg 1**
**NL-5621 BA Eindhoven(NL)FR GB**

(72) Erfinder: **Kordts, Jürgen**
**Pulverstrasse 11**
**W-2000 Wedel(DE)**
Erfinder: **Martens,Gerhard,Dr.**
**Breslauer Strasse 40**
**W-2359 Henstedt-Ulzburg(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

## Beschreibung

Die Erfindung bezieht sich auf ein Verfahren zur Ermittlung von Meßdaten über eine optische Übertragungsstrecke mittels eines optischen Sensors, welcher einen optischen Wandler enthält, dessen optischen Dämpfungseigenschaften meßwertabhängig beeinflußbar sind und durch welchen ein erster Teilstrahl eines hochfrequent amplitudenmodulierten optischen Sendestrahls geleitet wird, während ein zweiter Teilstrahl dieses Sendestrahls über ein Verzögerungselement umgeleitet und gemeinsam mit dem den optischen Wandler verlassenden ersten Teilstrahl über die Übertragungsstrecke als Empfangsstrahl einer Empfangseinrichtung zugeführt wird, durch welche die vom Sensor bewirkte Modulationsänderung als Information über die Meßgröße aufbereitet und ausgewertet wird.

Ein derartiges Verfahren ist in "Proceedings of the 2nd International Conference on Fiber Optic Sensors", Stuttgart 1984, S. 387 bis 390 beschrieben. Im bekannten Fall wird einer der Teilstrahlen des Sendestrahls, welcher nicht vom Wandler des Sensors beeinflußt wird, durch eine optische Verzögerungsleitung geführt und zeitversetzt mit dem vom Wandler beeinflußten Teilstrahl wieder vereinigt und in eine der Übertragung zu einer Empfangseinrichtung dienende LWL geleitet. Der durch die Verzögerungsleitung gesendete Teilstrahl bildet einen Referenzstrahl. Die relativen Phasenwinkel der Modulationsanteile der beiden Teilstrahlen sind unterschiedlich. Der resultierende Phasenwinkel des empfangenen Strahls wird mit dem Ursprungsphasenwinkel des Sendestrahls verglichen. Aus dem Differenzwinkel bzw. der Phasenverschiebung läßt sich eine Aussage über den Meßwert ableiten welche von evtl. Schwankungen der Dämpfung der Übertragungsstrecke vom und bis zum Sender unabhängig ist. Allerdings muß die gesamte Länge der Übertragungsstrecke von der Lichtquelle zum Sensor und vom Sensor zur Empfangseinrichtung bekannt sein, da nur unter dieser Voraussetzung die Größe des Meßwerts aus dem Differenzwinkel ermittelt werden kann. Bei einer Änderung der Gesamtlänge der optischen Übertragungsstrecke muß die Empfangseinrichtung neu kalibriert werden.

Der Erfindung liegt die Aufgabe zugrunde, das Verfahren der eingangs genannten Art derart zu gestalten, daß eine senderseitige Meßwerterfassung bei beliebigen optischen Übertragungsstrecken unbestimmter Länge ohne Nachkalibrierung der Empfangseinrichtung möglich ist.

Die Lösung gelingt dadurch, daß der optische Sendestrahl zusätzlich niederfrequent amplitudenmoduliert wird, daß ein ursprünglicher Modulationsgrad $m_o$ des Sendestrahls als Quotient der niederfrequenten zur hochfrequenten Modulationsamplituden fest vorgegeben und der Empfangseinrichtung als Information eingegeben wird, daß der durch den Sensor beeinflußte empfangene Modulationsgrad $m_1$ des Empfangsstrahls von der Empfangseinrichtung gemessen und das Verhältnis von empfangenem und ursprünglichem Modulationssignal als Information über den Meßwert ausgewertet wird.

Theoretische Überlegungen zeigen, daß das Verhältnis der Modulationsgrade der beiden Teilstrahlen nicht nur von der Dämpfung der Übertragungsstrecke, sondern auch von deren Länge unabhängig ist. Mittels der erfindungsgemäß vorgesehenen Doppelmodulation mit erheblich voneinander abweichenden Frequenzen ist es möglich, aus den empfangenen optischen Signalen den vom Sender geänderten Modulationsgrad $m_1$ zuverlässig zu ermitteln, ohne daß dabei Verfälschungen durch den Dunkelstrom eines Photodetektors entstehen können.

Damit sich für die niederfrequente Modulation praktisch kein Phasenunterschied auf den beiden Teilstrahlen ergibt, ist es vorteilhaft, daß die Modulationsfrequenzen der hochfrequenten und der niederfrequenten Modulationen im Verhältnis von mindestens $10^3$ unterschiedlich sind.

Gemäß einer vorteilhaften Ausführungsart der Erfindung ist vorgesehen, daß das hochfrequente Modulationssignal mit dem niederfrequenten Modulationssignal multipliziert ist und daß die Spitzenwerte der durch Filter separierten Modulationssignale ermittelt werden.

Dadurch, daß die Modulationsamplituden der hochfrequenten Modulation doppelt so groß wie die der niederfrequenten Modulation gewählt wird, läßt sich mit einfachen schaltungstechnischen Mitteln ein stets gleichbleibend konstanter ursprünglicher Modulationsgrad $m_o$ vorgeben.

Besonders einfach sind Modulationen mit rechteckförmigen Verläufen schaltungsmäßig zu realisieren.

Einfache Schaltungsaufbauten ergeben sich auch dann, wenn die hochfrequente Modulation nur den positiven Bereich der niederfrequenten Modulation überlagert. Dabei ist es nicht erforderlich, daß die Zeitdauer der positiven Halbwelle der niederfrequenten rechteckförmigen Modulation der Zeitdauer der negativen Halbwelle gleich ist. Vorteilhaft ist es jedoch, daß die überlagerte hochfrequente Modulation aus symmetrischen positiven und negativen Halbwellen besteht. Das ist bei rechteckförmigen Modulationen unabhängig von jeweiligen Krümmungen der Kennlinie einer LED prinzipiell gewährleistet.

Eine besonders einfache Möglichkeit zur Bildung eines bekannten und gleichbleibenden Modulationsgrades ergibt sich dadurch, daß vom Sender Gruppen von optischen Rechteckimpulsen mit einem Tastverhältnis 1:1 gesendet werden, und daß auf die Sendezeit einer Gruppe eine Pausenzeit folgt, deren Länge ein Vielfaches der Periodendauer der Rechteckimpulse beträgt.

Mit dem erfindungsgemäßen Verfahren erreicht man eine besonders hohe Meßempfindlichkeit, wenn die Länge der Verzögerungsleitung etwa ein ungerades Vielfaches einer halben Wellenlänge der hochfrequenten Modulation ist.

Die Erfindung wird anhand der Beschreibung von in der Zeichnung dargestellten vorteilhaften Ausführungsbeispielen näher erläutert.

Figur 1    zeigt eine Prinzipanordnung zur Ermittlung von Meßdaten mittels eines optischen Sensors unter Verwendung einer optischen Verzögerungsleitung

Figur 2    zeigt das Blockschaltbild einer für das erfindungsgemäße Verfahren geeigneten Senderschaltung

Figur 3    zeigt das Blockschaltbild einer für das erfindungsgemäße Verfahren geeigneten Empfängerschaltung

Figur 4    zeigt Signalverläufe für eine erste Ausführungsart der Erfindung

Figur 5    zeigt Signalverläufe für eine zweite Ausführungsart der Erfindung

Figur 6    zeigt einen Verlauf der Sendesignale für eine dritte Ausführungsart der Erfindung.

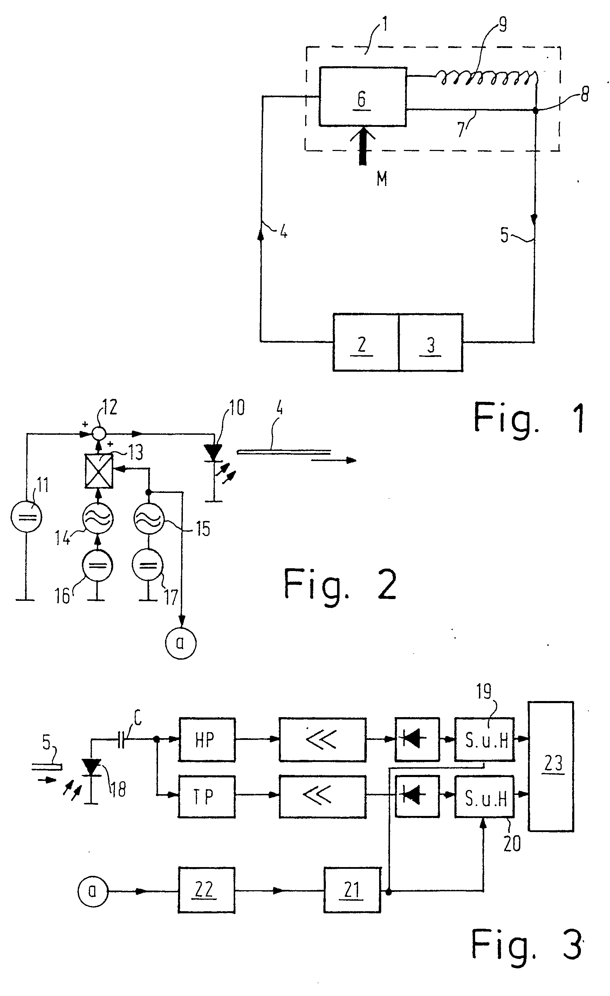

Die in Figur 1 dargestellte bekannte Anordnung besteht aus dem Sensor 1, dem Sender 2 und dem Empfänger 3, welche über Lichtwellenleiter 4 bzw. 5 mit dem Sensor 1 verbunden sind. Das optische Dämpfungsverhalten des Wandlers 6 ist von der Meßgröße M (z.B. Druck) abhängig. Der über die LWL 4 zugeführte modulierte Sendestrahl wird im Wandler in zwei Teilstrahlen aufgeteilt, von welchen der erste möglichst stark von der Meßgröße beeinflußt und über die Leitung 7 und den optischen Koppler 8 in den LWL 5 geleitet wird. Der zweite Teilstrahl (Referenzstrahl), welcher möglichst wenig oder gegenläufig zum ersten Teilstrahl von der Meßgröße beeinflußt ist und auch am Wandler 6 vorbeigeführt werden kann, wird durch die Verzögerungsleitung 9 auf den Koppler 8 und dann in den LWL 5 geleitet. Das Summensignal wird vom Empfänger 3 empfangen, aufbereitet und ausgewertet zur Bildung einer den Meßwert M wiedergebenden Anzeige.

Die Verzögerungsleitung 9 bewirkt, daß die Phasen und Amplituden der Modulationen der beiden Teilstrahlen verschieden voneinander sind. Statt einer Verzögerungsleitung könnten auch beliebige andere Verzögerungselemente eingesetzt werden, wie z.B. lumineszierende Kristalle (vergl. Electronics Letters 17, 1981, S. 630).

Mit der in Figur 2 dargestellten Senderschaltung wird die von der LED 10 gesendete Lichtintensität hochfrequent mit insbesondere 10-100 MHz und niederfrequent mit vorzugsweise 0,5 bis 2 kHz moduliert. Dem von der Gleichstromquelle 11 erzeugten Gleichstrom werden an der Stelle 12 Modulationsströme über das Überlagerungsglied 13 überlagert. Die Modulationsströme werden durch eine hochfrequente Spannungsquelle 14, eine niederfrequente Spannungsquelle 15 und Gleichspannungsquellen 16 bzw. 17 hervorgerufen. Die Spannungsquellen 14 bzw. 15 können je nach gewünschtem Signalverlauf sinusförmige oder rechteckförmige Signale erzeugen.

Der optoelektronische Wandler 18 (Photodiode) der Empfängerschaltung nach Figur 3 wandelt das über den LWL 5 zugeführte modulierte Licht in dem Intensitätsverlauf des Lichts gleiche elektrische Signale um. Zusätzlich ist jedoch ein Dunkelstrom $I_D$ überlagert. Durch den Kondensator C werden evtl. vorhandene Gleichlichtanteile des Sendesignals und der Dunkelstrom des optoelektronischen Wandlers 18 abgeblockt. Durch den Hochpaß HP gelangt das verstärkte hochfrequente Modulationssignal nach Spitzenwertgleichrichtung in die Sample and Hold-Schaltung 19 und das niederfrequente Modulationssignal über den Tiefpaß TP nach Verstärkung und Spitzenwertgleichrichtung in die Sample and Hold-Schaltung 20. Die Sample and Hold-Schaltungen 19 und 20 werden mit der niederfrequenten Modulationsperiode über die von der Senderschaltung kommende Leitung a getaktet. Ein Verzögerungselement 21 ermöglicht eine gewünschte Zuordnung der Meßzeit relativ zum Maximum der niederfrequenten Modulation. Falls die niederfrequente Modulation nicht an sich schon rechteckförmig verläuft, werden durch den Schwellwertschalter 22 rechteckförmige Ausgangssignale erzeugt.

Die Auswerteschaltung 23 dekodiert schließlich die verschiedenfrequenten Modulationssignale, so daß eine dem Meßwert M proportionale Information erhalten werden kann.

Mit den in den Figuren 2 und 3 dargestellten Schaltungen sind verschiedene Signalformen mit erfindungsgemäß doppelter Modulation übertragbar und auswertbar.

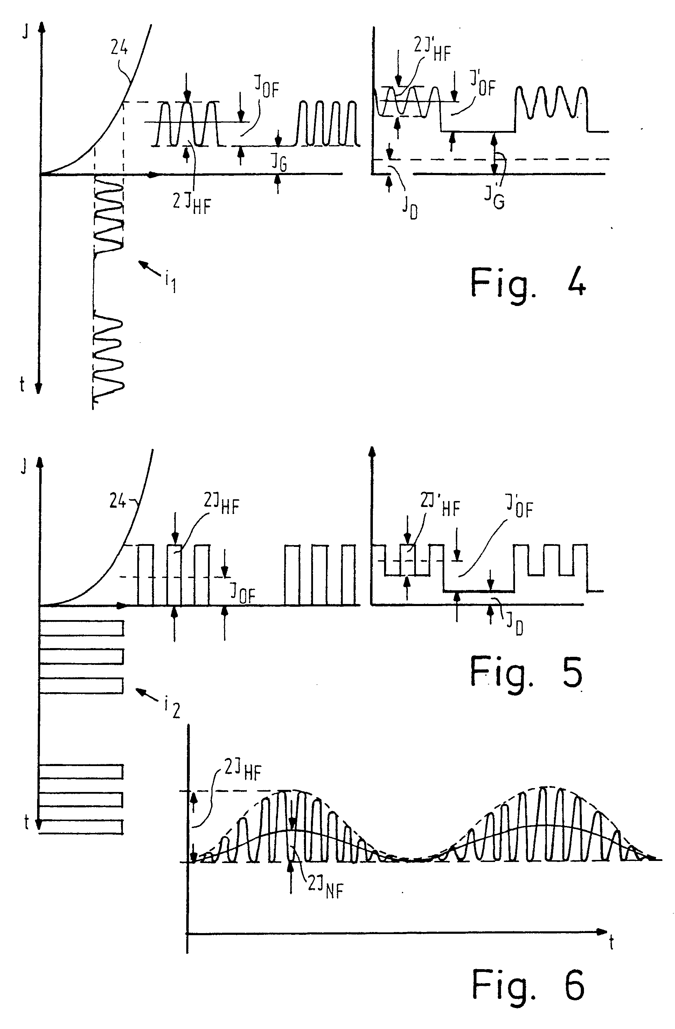

Bei entsprechender Gestaltung der Generatoren 14 und 15 (Figur 2) können beispielsweise kontinuierlich sinusförmig verlaufende Signalformen aufmoduliert werden. Dann ergibt sich beispielsweise ein Verlauf des Sendesignals nach Figur 6, wenn gleichzeitig das Übertragungsglied 13 in Figur 2 als Multiplikator ausgebildet ist.

Besonders einfach sind Schaltungen zu realisieren, welche rechteckförmige niederfrequente Modulationen erzeugen entsprechend den in den Figuren 4 und 5 dargestellten Signalverläufen.

EP 0 244 883 B1

Auf Sendezeiten, während welcher hochfrequente Impulse gesendet werden, folgen Pausenzeiten, während welcher keine hochfrequenten Impulse übertragen werden. Sendezeiten und Pausenzeiten dürfen verschieden lang sein. Wichtig ist jedoch, daß die hochfrequente Modulationsfrequenz HF sehr viel größer als die niederfrequente Modulationsfrequenz NF bzw. als die niedrige Taktfrequenz der aufeinanderfolgenden Sende- und Pausenzeiten ist.

In den Figuren 4, 5 und 6 sind Signalformen dargestellt, bei welchen senderseitig die Amplituden der hochfrequenten Modulationen doppelt so groß wie die Amplituden der niederfrequenten Modulationen sind. Der ursprüngliche gesendete Modulationsgrad ist dann $m_o$ = 0,5. Dieser Wert ist durch die Senderschaltung schaltungsbedingt fest und unveränderbar vorgegeben, so daß empfängerseitig der Wert $m_o$ = 0,5 als konstante Größe voraussetzbar ist. Die Senderschaltung ist dann jeweils so gestaltet, daß einem zeitlich unveränderlichen Basisniveau bzw. Gleichlicht $I_G$, welches auch den Wert "Null" annehmen kann, ein hochfrequent intensitätsmoduliertes Wechsellicht mit der Amplitude $I_{HF}$ bei einem Offset-Anteil von stets $I_{OF}$ = $I_{HF}$ überlagert ist, wobei während gewisser Zeitintervalle (Pausenzeiten) die Amplitude $I_{HF}$ den Wert "Null" annehmen muß. Der Offset-Anteil $I_{OF}$ wird als niederfrequentes Modulationssignal $I_{OF}$ = 2 $I_{NF}$ übertragen. Das kann entweder mit einem sinusförmigen Verlauf gemäß Figur 6 oder mit rechteckigem Verlauf gemäß den linken Seiten der Figur 4 oder 5 erfolgen. Die Übertragung des Offset-Anteils $I_{OF}$ als niederfrequentes Signal ergibt den Vorteil, daß dessen Amplitude vom Gleichlichtanteilen trennbar ist. Insbesondere können Dunkelströme $I_D$ einer Photodiode des Empfängers den Wert des Offset-Anteils nicht verfälschen.

Da andererseits die Frequenz der niederfrequenten Modulation sehr niedrig ist, werden die Offset-Anteile $I_{OF}$ auf den beiden Wegen 7 und 9 (Figur I) der Teilstrahlen praktisch nicht relativ zueinander phasenverschoben. Diesbezüglich besteht praktisch kein Unterschied gegenüber Gleichlichtanteilen.

Die linken Seiten der Figuren 4 und 5 zeigen jeweils senderseitige optische Impulsverläufe, während rechts davon die empfängerseitig von der Photodiode I8 gebildeten zugehörigen elektrischen Ausgangssignale dargestellt sind.

Gemäß Figur 4 wird die LED I0, deren Kennlinie 24 einen gekrümmten Verlauf hat, mit einem Steuerstrom $i_1$ betrieben, welcher einen zeitunabhängig konstanten Anteil aufweist, welcher ein Gleichlicht $I_G$ bewirkt. Infolge dieses konstanten Offset-Anteils wird die LED in einem nahezu linearen Bereich der Kennlinie 24 betrieben, so daß die Modulationshalbwellen gleich sind. Dem konstanten Anteil sind Blöcke von hochfrequent aufeinanderfolgenden Impulsen überlagert, welche sinusförmige Intensitätsschwankungen des gesendeten Lichts mit der Amplitude $I_{HF}$ bewirken, die mit einer Offset-Intensität $I_{OF}$ dem Gleichlichtanteil $I_G$ überlagert sind.

Das elektrische Ausgangssignal der Photodiode I8 enthält dann einen Gleichanteil $I'_G$, welcher zusätzlich den Dunkelstrom $I_D$ der Photodiode I8 beinhaltet. Eine Aufspaltung dieser Stromanteile ist jedoch nicht erforderlich, da lediglich der Offset-Anteil $I'_{OF}$ ausgewertet wird, welcher dem gesendeten Offset-Anteil $I_{OF}$, unbeeinflußt durch den Dunkelstrom $I_D$, proportional ist. Der Wert $I'_{OF}$ ist vom Meßwert M, aber nicht von der Verzögerungsleitung 9 beeinflußt, während das Empfangssignal $I'_{HF}$ zusätzlich infolge der Wirkung der Verzögerungsleitung 9 in der relativen Größe zum Offset-Anteil verkleinert ist. Der empfangene Modulationsgrad $m_1$ hat sich also gegenüber dem gesendeten verändert. Das Ausmaß dieser Veränderung beinhaltet eine eindeutige Information über die zu ermittelnde Meßgröße M.

Die hochfrequente Modulation könnte in der gemäß Figur 4 beschriebenen Art senderseitig auch mit rechteckförmigem Verlauf erfolgen, wenn ein entsprechender Generator I4 in einfacher Weise unter Verwendung von Kippschaltungen aufgebaut wird. Eine Auswertung kann empfängerseitig ebenfalls mit einer Schaltung nach Figur 3 durchgeführt werden, wenn der Hochpaß HP als Bandpaß ausgebildet ist, so daß lediglich die Grundharmonische der rechteckförmigen hochfrequenten Sendemodulation ausgewertet wird.

Eine besonders einfache und bevorzugte Ausführungsart der Erfindung wird mit in Figur 5 dargestellten Signalverläufen ermöglicht. Dort wird der Ansteuerstrom $i_2$ in von Pausenzeiten beabstandeten Blöcken mit einem Tastverhältnis "eins" hochfrequent rechteckförmig gepulst. Unabhängig von der Krümmung der LED-Kennlinie 24 ergeben sich stets rechteckförmige optische Modulationssignale mit einem Tastverhälnis "eins", so daß die Bedingung $I_{HF}$ = $I_{OF}$ genau eingehalten ist.

Die auf der rechten Seite der Figur 5 dargestellten elektrischen Ausgangssignale der Photodiode I8 haben unter der Voraussetzung, daß die Länge $\Delta$ L der Verzögerungsleitung 9 ein ungerades Vielfaches der Hälfte der Modulationswellenlänge beträgt ($\Delta$ L = $(2k + I) \frac{\lambda}{2}$ ; $k = 0,2..$), ebenfalls den dargestellten rechteckförmigen Verlauf, so daß der Hochpaß HP nach Figur 3 nicht durch einen Bandpaß ersetzt zu werden braucht.

Je nach der Modulationsfrequenz $\omega_{HF}$ und der zugehörigen Wellenlänge $\lambda$ ergeben sich dann typische Werte der Länge $\Delta$ L der Verzögerungsleitung wie folgt:

4

L = I m für $\lambda$ = 2 m und $\omega_{HF}$ = 100 MHz

L = 10 m für $\lambda$ = 20 m und $\omega_{HF}$ = 10 MHz.

Der für die Ermittlung der Meßgröße M benötigte Quotient der Transmissionen $T_1$ und $T_2$ der Teilwege über die Verzögerungsleitung 9 bzw. über den direkten Weg 7 ergibt sich aus der Gleichung

$$\frac{m_1}{m_o} = \frac{T_1 - T_2}{T_1 + T_2} \quad , \quad \text{falls } \Delta L = (2k+1)\frac{\lambda}{2} \quad \text{ist.}$$

Im Allgemeinfall gilt:

$$\frac{m_1}{m_o} = \frac{1}{T_1 + T_2} \cdot \sqrt{T_1^2 + T_2^2 + 2T_1 \cdot T_2 \cos\Delta\varphi}$$

mit

$$\Delta\varphi = 2\pi \cdot \Delta L / \lambda .$$

Als Transmission T wird in üblicher Weise das Verhältnis der am Ende einer Transmissionsstrecke auftretenden Intensität zu der am Anfang der Übertragungsstrecke vorhandenen ursprünglichen Intensität bezeichnet.

Bei $\Delta L = (2k + 1)\frac{\lambda}{2}$ oder bei zumindest angenäherter Einhaltung dieser Bedingung ergibt sich die größte Meßempfindlichkeit.

**Patentansprüche**

1. Verfahren zur Ermittlung von Meßdaten über eine optische Übertragungsstrecke mittels eines optischen Sensors, welcher einen optischen Wandler enthält, dessen optische Dämpfungseigenschaften meßwertabhängig beeinflußbar sind und durch welchen ein erster Teilstrahl eines hochfrequent amplitudenmodulierten optischen Sendestrahls geleitet wird, während ein zweiter Teilstrahl dieses Sendestrahls über ein Verzögerungselement umgeleitet und gemeinsam mit dem den optischen Wandler verlassenden ersten Teilstrahl über die Übertragungsstrecke als Empfangsstrahl einer Empfangseinrichtung zugeführt wird, durch welche die vom Sensor bewirkte Modulationsänderung als Information über die Meßgröße M aufbereitet und ausgewertet wird,
dadurch gekennzeichnet, daß der optische Sendestrahl zusätzlich niederfrequent moduliert wird, daß ein ursprünglicher Modulationsgrad $m_o$ des Sendestrahls als Quotient der niederfrequenten $I_{NF}$ zur hochfrequenten $I_{HF}$ Modulationsamplituden fest vorgegeben und der Empfangseinrichtung (3) als Information eingegeben wird, daß der durch den Sensor beeinflußte empfangene Modulationsgrad

$$m_1 = \frac{I'_{NF}}{I'_{HF}}$$

des Empfangsstrahls von der Empfangseinrichtung (3) gemessen und das Verhältnis von empfangenem und ursprünglichem Modulationssignal als Information über den Meßwert M ausgewertet wird.

2. Verfahren nach Anspruch I,
dadurch gekennzeichnet, daß die Modulationsfrequenzen des hochfrequenten und der niederfrequenten Modulationen im Verhältnis von mindestens $10^3$ unterschiedlich sind.

3. Verfahren nach Anspruch I oder 2,
dadurch gekennzeichnet, daß das hochfrequente Modulationssignal mit dem niederfrequenten Modulationssignal multipliziert ist und daß die Spitzenwerte der durch Filter separierten Modulationssignale ermittelt werden.

**4.** Verfahren nach einem der Ansprüche I bis 3,
dadurch gekennzeichnet, daß die Modulationsamplitude $I_{HF}$ der hochfrequenten Modulation doppelt so groß wie die Amplitude $I_{NF}$ der niederfrequenten Modulation ist.

**5.** Verfahren nach einem der Ansprüche I bis 4,
dadurch gekennzeichnet, daß die niederfrequente Modulation rechteckförmig erfolgt.

**6.** Verfahren nach einem der Ansprüche I bis 5,
dadurch gekennzeichnet, daß die hochfrequente Modulation nur dem positiven Bereich der niederfrequenten Modulation überlagert ist.

**7.** Verfahren nach einem der Ansprüche 5 oder 6,
dadurch gekennzeichnet, daß die Zeitdauer der positiven Halbwelle der niederfrequenten rechteckförmigen Modulation von der Zeitdauer der negativen Halbwelle abweicht.

**8.** Verfahren nach einem der Ansprüche 5 bis 7,
dadurch gekennzeichnet, daß die überlagerte hochfrequente Modulation aus symmetrischen negativen und positiven Halbwellen besteht.

**9.** Verfahren nach einem der Ansprüche 5 bis 8,
dadurch gekennzeichnet, daß vom Sender Gruppen optischer Rechteckimpulse mit einem Tastverhältnis "eins" gesendet werden, und daß auf die Sendezeit einer Gruppe von Rechteck-Impulsen jeweils eine Pausenzeit folgt, deren Länge ein Vielfaches der Periodendauer der Rechteck-Impulse beträgt.

**10.** Verfahren nach einem der Ansprüche I bis 9,
dadurch gekennzeichnet, daß die Länge der Verzögerungsleitung etwa ein ungerades Vielfaches der Hälfte der hochfrequenten Modulationswellenlänge ist.

## Claims

**1.** Method of determining measuring data along an optical transmission path by means of an optical sensor, which optical sensor includes an optical converter whose optical attenuation properties can be influenced according to the value to be measured and through which a first beam portion of a high-frequency amplitude-modulated optical transmission beam is passed, while a second beam portion of this transmission beam is diverted via a delay element and is applied together with a first beam portion leaving the optical converter via the transmission path as a receive beam to the receiver arrangement, whereby the modulation change produced by the sensor is processed and evaluated to provide information about the measured quantity M, characterized in that the optical transmission beam is additionally subjected to low-frequency modulation, in that an original modulation factor $m_0$ of the transmission beam is preset as the ratio of the low-frequency to high-frequency modulation amplitude ($I_{NF} : I_{HF}$) and is fed as information to the receiver arrangement (3), in that the sensor-influenced received modulation factor

$$m_1 = \frac{I'_{NF}}{I'_{HF}}$$

of the receive beam is measured by the receiver arrangement (3) and the received-to-original modulation signal ratio is evaluated as information about the value to be measured M.

**2.** Method as claimed in Claim 1, characterized in that the modulation frequencies of the high-frequency and low-frequency modulations differ from each other by a ratio of at least $10^3$.

**3.** Method as claimed in Claim 1 or 2, characterized in that the high-frequency modulation signal is multiplied by the low-frequency modulation signal and in that the peak values of the modulation signals separated by filters is determined.

EP 0 244 883 B1

4. Method as claimed in any one of the Claims 1 to 3, characterized in that the modulation amplitude $I_{HF}$ of the high-frequency modulation is twice as large as the amplitude $I_{NF}$ of the low-frequency modulation.

5. Method as claimed in any one of the Claims 1 to 4, characterized in that the low-frequency modulation is effected in a square-wave mode.

6. Method as claimed in any one of the Claims 1 to 5, characterized in that the high-frequency modulation is only superimposed on the positive range of the low-frequency modulation.

7. Method as claimed in Claim 5 or 6, characterized in that the duration of the positive half-wave of the low-frequency square-wave modulation differs from the duration of the negative half-wave.

8. Method as claimed in any one of the Claims 5 to 7, characterized in that the superimposed high-frequency modulation is formed by symmetrical negative and positive half-waves.

9. Method as claimed in any one of the Claims 5 to 8, characterized in that the transmitter transmits groups of optical square-wave pulses having a duty cycle of "one" and in that at the transmit end a group of square-wave pulses are always followed by a pause interval whose length is a multiple of the duration of the square-wave pulses.

10. Method as claimed in any one of the Claims 1 to 9, characterized in that the length of the delay line is approximately an odd multiple of half the high-frequency modulation wavelength.

## Revendications

1. Procédé pour déterminer des données de mesure par l'intermédiaire d'une ligne de transmission optique à l'aide d'un capteur optique, qui comporte un transducteur optique dont les propriétés d'affaiblissement optique peuvent être influencées par la valeur de mesure et à travers lequel est guidé un premier rayon partiel d'un rayon d'émission optique modulé en amplitude à haute fréquence, tandis qu'un second rayon partiel de ce rayon d'émission est dévié pour traverser un élément à retard et est appliqué, conjointement avec le premier rayon partiel quittant le transducteur optique, par l'intermédiaire de la ligne de transmission, à titre de rayon de réception, à un dispositif récepteur à l'aide duquel la variation de modulation produite par le capteur est préparée et évaluée comme information concernant la grandeur de mesure M, caractérisé en ce que le rayon d'émission optique est, en outre, modulé en amplitude à basse fréquence, qu'un taux de modulation initial $m_0$ du rayon d'émission est prédéterminé sous la forme du quotient entre les amplitudes de modulation à basse fréquence $I_{NF}$ et à haute fréquence $I_{HF}$ et est introduit, à titre d'information, dans le dispositif récepteur (3), que le taux de modulation $m_1 = I'_{NF}/I'_{NF}$ du rayon de réception reçu, influencé par le capteur, est mesuré par le dispositif récepteur et que le rapport entre le signal de modulation reçu et le signal de modulation initial est évalué à titre d'information concernant la valeur de mesure M.

2. Procédé suivant la revendication 1, caractérisé en ce que les fréquences de modulation à haute fréquence et à basse fréquence diffèrent dans un rapport d'au moins $10^3$.

3. Procédé suivant la revendication 1 ou 2, caractérisé en ce que le signal de modulation à haute fréquence est multiplié par le signal de modulation à basse fréquence et que les valeurs de crête des signaux de modulation séparés par des filtres sont déterminées.

4. Procédé suivant l'une quelconque des revendications 1 à 3, caractérisé en ce que l'amplitude de modulation $I_{HF}$ de la modulation à haute fréquence vaut le double de l'amplitude $I_{NF}$ de la modulation à basse fréquence.

5. Procédé suivant l'une quelconque des revendications 1 à 4, caractérisé en ce que la modulation à basse fréquence est rectangulaire.

6. Procédé suivant l'une quelconque des revendications 1 à 5, caractérisé en ce que la modulation à haute fréquence n'est superposée qu'au domaine positif de la modulation à basse fréquence.

7

7. Procédé suivant l'une quelconque des revendications 5 et 6, caractérisé en ce que la durée de la demi-onde positive de la modulation rectangulaire à basse fréquence est différente de la durée de la demi-onde négative.

8. Procédé suivant l'une quelconque des revendications 5 à 7, caractérisé en ce que la modulation à haute fréquence superposée est formée de demi-ondes négative et positive symétriques.

9. Procédé suivant l'une quelconque des revendications 5 à 8, caractérisé en ce que l'émetteur émet des groupes d'impulsions rectangulaires optiques avec un taux d'impulsions de "un" et que le temps d'émission d'un groupe d'impulsions rectangulaires est chaque fois suivi d'un temps de pause dont la longueur est un multiple de la période des impulsions rectangulaires.

10. Procédé suivant l'une quelconque des revendications 1 à 9, caractérisé en ce que la longueur de la ligne à retard est à peu près égale à un multiple impair de la moitié de la longueur d'onde de modulation à haute fréquence.

EP 0 244 883 B1

Fig. 1

Fig. 2

Fig. 3

9

Fig. 4

Fig. 5

Fig. 6